Europäisches Patentamt

(19) European Patent Office

Office européen des brevets

(11) Publication number: **0 038 335**
**B1**

(12) **EUROPEAN PATENT SPECIFICATION**

(45) Date of publication of patent specification: **15.02.84**  (51) Int. Cl.³: **B 60 S 1/42** // B60S1/60

(21) Application number: **80901963.1**

(22) Date of filing: **28.10.80**

(86) International application number:
**PCT/GB80/00186**

(87) International publication number:
**WO 81/01271 14.05.81 Gazette 81/12**

(54) CONNECTOR ASSEMBLIES FOR CONNECTING WIPER BLADES TO WIPER ARMS.

(30) Priority: **31.10.79 GB 7937760**

(43) Date of publication of application:
**28.10.81 Bulletin 81/43**

(45) Publication of the grant of the patent:
**15.02.84 Bulletin 84/7**

(84) Designated Contracting States:
**FR**

(56) References cited:
**DE - A - 2 518 399**
**FR - A - 2 351 826**
**US - A - 2 641 007**

(73) Proprietor: **TRICO-FOLBERTH LIMITED**
**Great West Road**
**Brentford Middlesex TW8 9HP (GB)**

(72) Inventor: **DURTNAL, Graham**
**106 Cowper Road**
**Hanwell London, W.7 (GB)**

(74) Representative: **Dunlop, John Henderson et al,**
**GILL JENNINGS & EVERY 53-64 Chancery Lane**
**London WC2A 1HN (GB)**

## Connector assemblies for connecting wiper blades to wiper arms

This invention relates to connector assemblies for use in connecting wiper blades to wiper arms in arrangements for wiping surfaces such as the lenses or protective glasses of headlights on motor vehicles, rear-view mirrors, and windscreens.

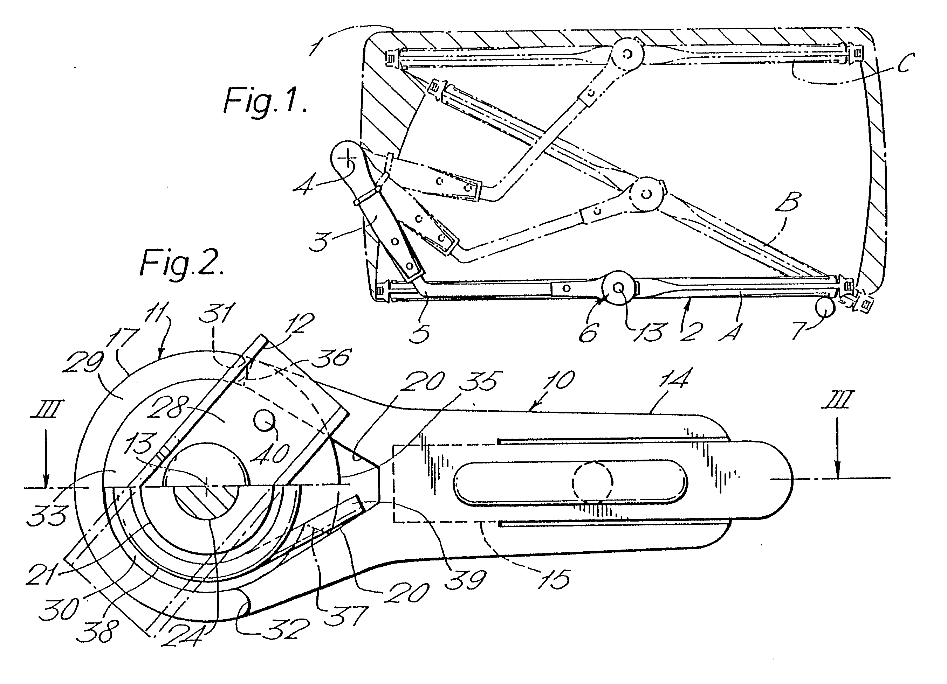

In order to maximise the surface wiped using a wiper blade oscillated by an arm about an axis outside a rim surrounding the glass, it is often the practice, particularly in relation to headlamps, to mount the wiper blade on a connector assembly secured to the wiper arm, permitting certain relative angular movement of the blade in relation to the arm about a common axis which in use is substantially perpendicular to the surface to be wiped. The operation of a known connector assembly of this kind will now be described with reference to Figure 1 of the accompanying drawings. This shows an example of a known headlamp wiping arrangement, and is a front elevation.

The headlamp front glass has a substantially rectangular outline 1. The wiper blade unit 2 is carried by a wiper arm 3, operated by a wiper shaft at 4. The arm has a permanent bend at 5. The outer end of the arm is connected to the middle of the blade unit 2 by a connector assembly 6.

In the parked position the blade unit lies at A, aligned with the adjacent part of the arm, and parallel and closely adjacent to the neighbouring edge of the glass. The connector assembly incorporates a spring tending to incline the blade in relation to the arm, but while the blade is in its parked position A, a stop 7 at the parked position, or a rim around the headlamp, prevents the blade from rotation about an axis 13. This axis passes through the connector assembly and intersects (nominally at right angles) the plane of the glass surface to be wiped. During the first part of an outward wiper arm stroke (i.e. away from the parked position A) the blade is progressively inclined by the spring until (at B) a pair of abutments (not shown) within the connector assembly 6 prevent further increase in inclination of the blade in relation to the arm. The extent of the inclination is such that, when the arm has completed its outward stroke (at C), the blade lies parallel to the edge of the glass opposite the parked position. In this manner an area of glass is wiped which would otherwise have been missed out had the blade maintained a fixed angular relationship to the arm throughout the arm stroke.

In the first part of the inward stroke, the blade is carried from C to B and then encounters the stop 7 or rim. During the remainder of the inward stroke, the blade progressively pivots relatively to the arm, and finishes at position A (identical with the parked position).

An example of one such connector assembly 6 is disclosed in German Offenlegungsschrift No. 26 22 437.

In that and other prior connector assemblies the range of relative rotation of the wiper blade unit and wiper arm is limited by suitably placed abutments formed on the two principal coaxial parts of the connector assembly. These two parts are basic to the assembly, one part being adapted to be attached to the wiper arm and the other part being adapted to be attached to the blade. The range of relative rotation possible with any particular assembly has been fixed by the spacing of abutment surfaces on the two parts. The spacing is determined by design, and produced in manufacture, and consequently is suited to a particular combination of factors, including the location of the wiper arm spindle axis in relation to the area to be wiped, and the lengths of the arm and blade, which factors are peculiar to each model of vehicle. Thus each connector assembly has tended to be designed, manufactured and stocked, having in mind application to a particular model of vehicle.

Another connector assembly is disclosed in German Offenlegungsschrift 25 18 399, for one specific use, in which the wiper blade moves between limiting positions which are symmetrical relative to the wiper arm. This assembly includes an abutment member of bent metal, having a bent-up lug gripped by the wiper arm and a bent-down finger extending between the flanges of a channel member serving as the part which is attached to the wiper blade. The amount of relative rotation of the channel member and the wiper arm permitted by this arrangement depends on the gap between the flanges of the channel member, in comparison with the width of the finger. The designer has a restricted choice, as the clearance between the flanges is a factor related to the width of the wiper blade, while the finger must have at least a minimum width for adequate strength. Furthermore, the attachment of the wiper blade to the channel member involves rivetting of a pivot pin, and this rivetting can alter the distance between the flanges. Thus the amount of relative rotation permitted is not accurately determined, and hence the desired relationship of the wiper blade to the edge of a glass is not reliably attained.

An object of the present invention is to widen the field of application of a connector assembly comprising two basic parts, each of a given shape.

A connector assembly according to the present invention, for use in connecting a wiper arm and a wiper blade for pivotal movement of the blade in relation to the arm about a common axis which in use is substantially perpendicular to the surface to be wiped, comprises two basic parts, namely a first part for attachment to the wiper arm and a second part for attachment directly or indirectly to the wiper blade, the parts being pivotally connected together for relative angular movement about the common axis, and there being abutment means for limiting the range of this relative angular movement, the assembly further comprising a discrete element arranged for rotation about the common axis in relation to one of the two basic parts, the abutment means comprising two first angularly spaced abutment faces carried by the portion of the assembly consisting in the two basic parts, and the abutment means further comprising two second angularly spaced abutment faces on the discrete element, the second faces being arranged to co-operate with the respective first faces to limit the range of relative angular movement of the two basic parts about the common axis (see DE-A1-2518399). The invention is characterised in that the discrete element is essentially a flat disc lying between the two basic parts and having a central hole through which passes the common axis, the element having portions of differing radius, joined by radial faces which constitute the second abutment faces; and the first abutment faces are on a portion of one of the two basic parts which extends a sufficient distance towards the other basic part to enable each first abutment face to engage a respective second abutment face when the relative angular movement occurs.

The form of the discrete element and the manner of providing the first abutment faces is such that the amount of permitted relative rotation can be given a selected value within a wide range, and that value can be accurately determined, since the provision of the abutment faces is independent of any other function.

Furthermore, the limiting positions of the wiper blade relative to the wiper arm need not be symmetrical, but can be as appropriate for any particular use.

A variety of applications of the assembly demanding different ranges of angular movement of the blade in relation to the arm may be served by providing the two basic parts plus a plurality of the discrete elements, these elements differing in the spacing of the abutment faces thereon. For a particular application, the appropriate element is selected and is assembled with the two basic parts.

One of the basic parts and the element may be releasably coupled for rotation about the common axis and be separable from each other and from the other basic part, to enable substitution of the element to be made.

The assembly preferably includes spring means arranged to act between the element and one of the basic parts to urge one of the second abutment faces into engagement with one of the first abutment faces.

The spring means is conveniently a coil spring surroundding the common axis of the assembly.

Examples of connector assemblies embodying the present invention will now be described with reference to the accompanying drawings, in which:—

Figure 1 shows a known arrangement, already described earlier in this specification;

Figure 2 is an underside plan of a first embodiment of the invention, partly in section on the line II—II in Figure 3, indicating the normal angular relationship between a part for receiving a wiper arm termination and another part for receiving a wiper blade (i.e. the relationship at B and C in Figure 1);

Figure 3 is a longitudinal section of the first embodiment, on the line III—III in Figure 2, but indicating the relationship of the parts when at A in Figure 1;

Figure 4 is an underside plan of an element of the first embodiment;

Figure 5 is a view corresponding to the left part of Figure 3, but showing a modification;

Figure 6 is an underside diagrammatic view of a second embodiment of the invention;

Figure 7 is a fragmentary underside plan of a third embodiment of the invention;

Figure 8 is a section of the third embodiment on the line VIII—VIII in Figure 7; and

Figure 9 is an underside plan of an element of the third embodiment.

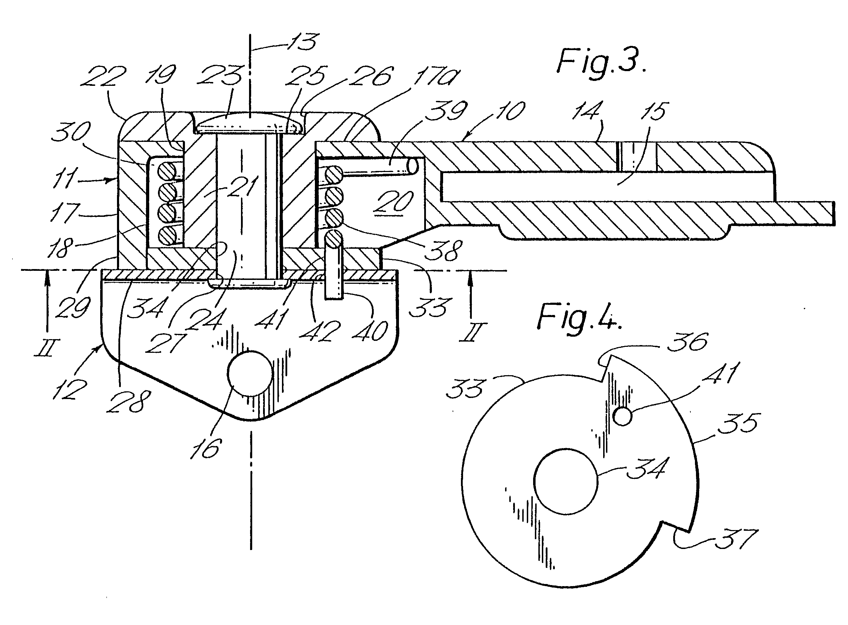

Referring to Figures 2 and 3, the connector assembly 10 comprises two basic parts 11, 12. These parts 11, 12 are relatively rotatable about a common axis 13 extending through the assembly 10. (Where components in Figures 2 to 4 correspond in function to components in Figure 1, we use the same reference numerals.)

Part 11 is for attachment to a wiper arm and the other part 12 is for connection to a wiper blade. In this example part 11 has an arm 14 providing a known socket termination 15 for receiving and releasably fastening a wiper arm with a known bayonet fixing termination. Also, part 12 is of channel section and extends lengthwise at right angles to axis 13. The part is pierced at opposite sides by holes 16 to form a known saddle, which can be mounted on a rigid backing strip of a wiper blade, and receive a pivot pin connection through the hole 16.

The arm 14 of part 11 radiates from a generally cylindrical body portion 17 having a deep central recess 18 and an upper end wall 17a, in which is a circular eye 19 centred on axis 13. At the junction of the arm 14 and body 17, the recess 18 has tangential walls 20 which extend it laterally somewhat towards the inner end of the socket in arm 14. The eye 19 supports a bushing 21 for rotation about axis 13. The bushing 21 is retained at one end by engagement of an external flange 22 on the bushing with the end wall 17a of the body surrounding the eye 19, and with the head 23 of a rivet 24 which rotates with bushing 21. The head 23 engages a shoulder 25 in a counterbore 26 in bushing 21 at its flanged end. The shank of the rivet 24 extends from bushing 21 and recess 18 through a corresponding hole 27 in the web 28 of the channel-section part 12, and is expanded to retain parts 11, 12 in an assembled condition, in which they are close to one another but with clearance for relative rotation about axis 13.

Bushing 21 projects into recess 18 but does not reach as far downwards as the plane of the rim 29 of recess 18 adjacent to part 12. Bushing 21 thus defines a part-annular space 30 between itself and the walls of recess 18, the space being extended laterally of the bushing by the tangential walls 20 of recess 18.

The rim 29 of recess 18 is interrupted at the side adjoining the arm 14 to provide a pair of angularly spaced first abutment faces 31, 32. The spacing between them in this example is about 140°.

An element 33 is arranged between the bushing 21 and part 12. Element 33, see also Figure 4, is essentially a disc with a central hole 34 to receive the rivet 24. The radius of the element 33, for the majority of its circumference, is a little less than that of the recess 18, to ensure freedom of rotation in relation to part 11. The element has a radially enlarged sector 35 subtending an angle of about 90° at axis 13. The radial faces of sector 35 constitute second abutment faces 36, 37 which can respectively engage abutment faces 31, 32 on part 11, depending on the sense and extent of relative rotation between element 33 and part 11.

The space 30 between the recess 18 and bushing 21 contains a helical coil spring 38 surrounding bushing 21. The end 39 of the spring adjacent to the end wall 17a extends tangentially and engages one of the tangential walls 20 of recess 18. The other end or tail 40 of spring 38 is bent to lie parallel to axis 13 and extends through two corresponding holes 41, 42 in succession, one hole 41 being in element 33 and the other hole 42 being in web 28 of part 12.

The direction of the length of the channel of part 12 is normally inclined to the longitudinal axis of arm 14 of part 11 as can be seen in Figure 2. Spring 38 is prestressed torsionally about the axis 13 during installation, so that the spring end 39 reacts against the adjoining tangential wall 20 and the tail 40 urges abutment faces 31, 36 into contact. Thus the spring normally holds the element 33 and the channel of part 12 in the relationship with arm 14 seen in Figure 2. A wiper blade mounted in the channel of part 12, and a wiper arm inserted in the socketed arm 14, would be held in a similar relationship, as at B or C in Figure 1.

If part 12 is rotated about axis 13 relatively to part 11, as it would be between B and A in figure 1, during the inward wiper arm stroke after the wiper blade has contacted the stop or rim and become deflected from its normal inclination to the wiper arm, then part 12, element 33, bushing 21 and rivet 24 rotate as a unit because of the friction between them, the tail 40 of the spring in any event maintaining the angular relationship between part 12 and element 33. Loading on spring coil 38 is increased by the rotation. The rotation can continue until stopped by contact between abutment faces 32, 37. These abutment faces 32, 37 protect the spring 38 against any danger of over-stressing if the blade should encounter a foreign object (e.g. packed snow or ice), or if the arm should be carried too far by the wiper shaft, at the end of a stroke. In this example the channel of part 12 is now in alignment with arm 14 or part 11.

When restraint is removed from part 12, as in Figure 1 between A and B during the outward stroke of the wiper arm, then spring 38 urges element 33 and part 12 to counter-rotate relative to part 11. Counter-rotation ceases when contact is made between abutment faces 31, 36.

It will be appreciated that the possible extent of angular movement between parts 11, 12, and hence deflection of the wiper blade in relation to the wiper arm, is dependent upon the relative angular spacing of abutment faces 31, 32 and 36, 37. Thus it is possible to make up assemblies embodying like counterparts of parts 11, 12 but dissimilar elements 33 (differing in the angular spacing of abutment faces 36, 37) and thereby provide assemblies with corresponding differences in the possible extent of angular movement between parts 11, 12.

It is also possible to provide assemblies which are mirror images of each other (.e.g. for use respectively on a left-side and a right-side headlight) by using the same two basic parts 11, 12, but two springs, one of which is a mirror image of spring 38, and the same element 33 but inverted.

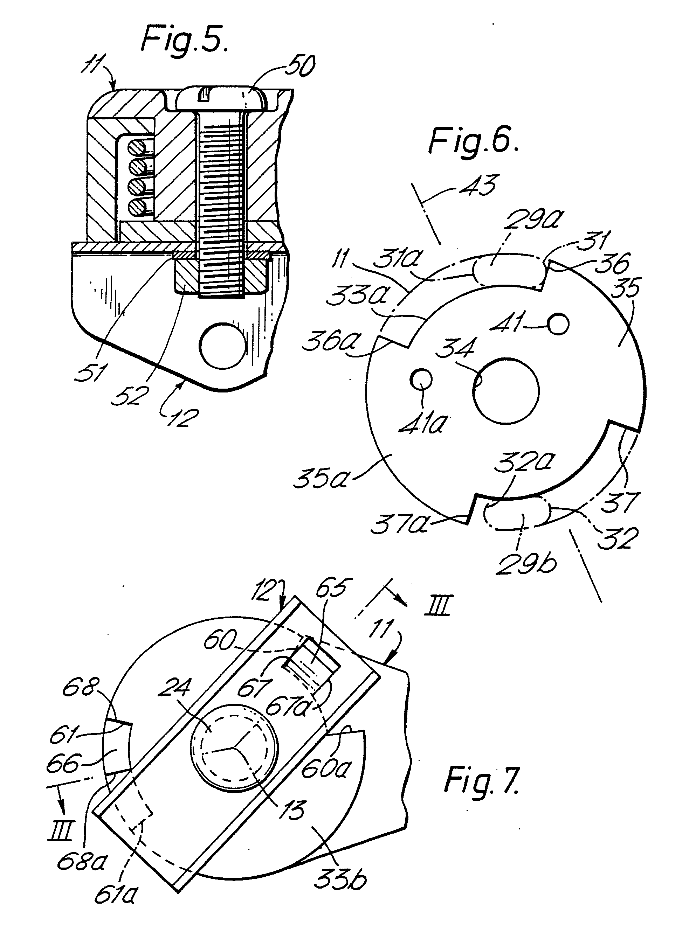

Figure 5 shows a modification in which the rivet 24 is replaced by a bolt 50, washer 51, and self-locking nut 52. This enables an assembly to be converted by dismantling, exchanging the element 33 for a different element, and reassembling.

Figure 6 shows an assembly in which a single element can provide two alternative ranges of relative angular movement.

In Figure 6, element 33a corresponds to element 33 of the first embodiment except for an additional radial extension 35a and another pair of second abutment faces 36a, 27a of different angular spacing, say 100°, from abutment faces 36, 37 (90°), the two pairs of abutment faces being arranged on opposite sides of a diameter 43 of the disc. Similarly the rim 29 on part 11 is modified by interrupting it to produce two angularly spaced lands 29a, 29b defined between first abutment face 31 and end 31a, the first abutment face 32 and end 32a respectively. The spacing between ends 31a, 32a (a minimum of say 150°) exceeds the spacing betweeen abutment faces 31, 32 (140°), and the lands 29a, 29b are equal, so that irrespective of which sector extension of element 33a lies between ends 31a, 32a, the sector extension between abutment faces 31, 32 will operate to determine the possible extent of rotation of element 33a relative to part 11. As to which of the two ranges mentioned is produced by assembling part 12 and the modified part 11 and element 33a depends upon whether faces 36 and 37 or 36a and 37a are arranged between faces 31, 32 during assembly of the connector.

Another possibility, not shown, is to omit the additional extension and the faces 36a, 37a and revert to the form of element 33 shown in Figure 4. Then the extent of rotation is determined by the faces 36, 37 lying either in the space between the faces 31, 32 or in the larger space between the ends 31a, 32a. These ends then serve as further first abutment faces.

One might omit the spring 38 from the assembly, and provide a pin in place of the tail 40 to couple the element 33 to the part 12. Then, referring to Figure 1, one would need a stop or rim at the top edge of the glass as well as at the bottom, and the sequence of movements in the outward stroke would differ from that earlier described: the blade unit would remain parallel to the arm in the first part of the outward stroke, and would rotate relative to the arm during the second part of the outward stroke, upon reaching the upper stop or rim. If desired, there may be deliberate provision of friction between the element 33 and the part 11.

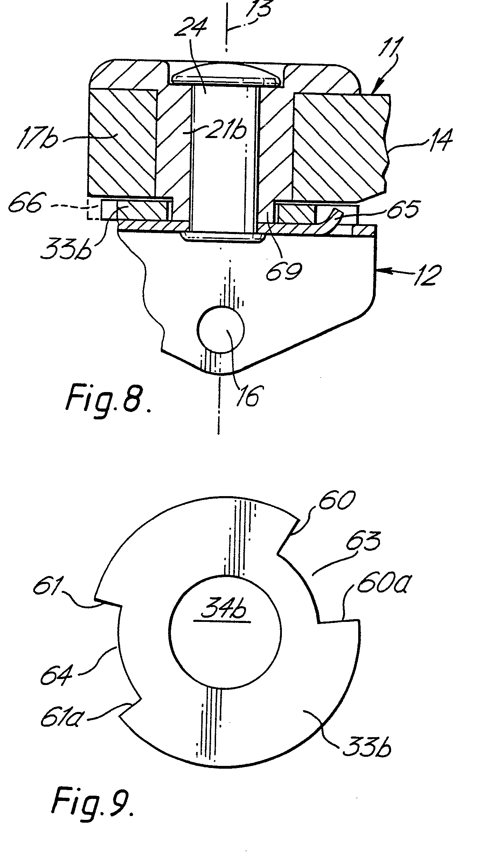

Figures 7 to 9 show an assembly in which, as just described, there is no spring, and friction is deliberately provided. However, in these Figures the element 33b is not coupled to either of the parts 11, 12. Because there is no spring, the part 11 has a solid body 17b, with a central bore receiving the bushing 21b. The bushing has a short lower end portion 69 of reduced diameter which enters a central hole 34b in the element 33b. The relative lengths of the body 17b and bushing 21b are such that, when the lower end of the rivet 24 is expanded, it clamps the part 12 to the bushing 21b, while leaving the element 33b able to rotate relatively to the part 12 about the axis 13.

The element 33b has cutouts 63, 64, ending respectively in radial abutment faces 60, 60a; 61, 61a. The cutout 63 receives a tab 65 struck up from the web of the channel-shaped part 12. This tab is of less arcuate extent than the cutout 63 about the axis 13, and the side edges of the tab act as abutment faces 67, 67a. The cutout 64 receives an axially extending lug 66 on the part 11. This lug is of less arcuate extent than the cutout 64 about the axis 13, and the radial sides of the lug act as abutment faces 68, 68a.

In the position, shown in Figure 7, which corresponds to C in Figure 1, the part 12 is at the anticlockwise limit of the range of its movement relative to the part 11 (considering part 11 as stationary and viewing the parts from below as in Figure 7). The abutment face 67 engages the abutment face 60, while the abutment face 61 engages the abutment fact 68. In this situation, the abutment faces 67 and 68 act as "first abutment faces" and the abutment faces 60 and 61 act as "second abutment faces", using the terminology of claim 1.

The blade unit is moved by the wiper arm from C to B (Figure 1), engages a stop or rim, and then is moved to A. In so doing, the part 12 rotates (clockwise as seen in Figure 7). During the relative movement of the parts 12 and 11, there is movement of both parts relative to the element 33b.

The second limit to the range of movement is provided by the abutment face 67a engaging the abutment face 60a, and by the abutment face 61a engaging the abutment face 68a.

Friction is provided between the parts 11 and 12 by suitable dimensions of the bushing 21b and of the central bore in the body 17b. Friction between the element 33b and the parts 11 and 12 is optional.

When the blade unit is moved from A to C (Figure 1), relative movement of the parts 11 and 12 starts when the blade unit engages the stop or rim at the top edge of the glass. The parts 11 and 12 and the element 33b then return to the relative positions shown in Figure 7.

**Claims**

1. A connector assembly for use in connecting a wiper arm (3) and a wiper blade (2) for pivotal movement of the blade in relation to the arm about a common axis (13) which in use is substantially perpendicular to the surface to be wiped, the assembly comprising two basic parts, namely a first part (11) for attachment to the wiper arm (3) and a second part (12) for attachment directly or indirectly to the wiper blade (2), the parts being pivotally connected together for relative angular movement about the common axis (13), and there being abutment means for limiting the range of this relative angular movement, the assembly further comprising a discrete element (33) arranged for rotation about the common axis in relation to one of the two basic parts, the abutment means comprising two first angularly spaced abutment faces (31, 32) carried by the portion of the assembly consisting in the two basic parts, and the abutment means further comprising two second angularly spaced abutment faces (36, 37) on the discrete element, the second faces being arranged to co-operate with the respective first faces to limit the range of relative angular movement of the two basic parts about the common axis, characterised in that the discrete element is essentially a flat disc (33) lying between the two basic parts and having a central hole (34) through which passes the common axis (13), the element having portions (33, 35) of differing radius, joined by radial faces (36, 37) which constitute the second abutment faces; and the first abutment faces (31, 32) are on a portion (29) of one of the two basic parts (11) which extends a sufficient distance towards the other basic part (12) to enable each first abutment face to engage a respective second abutment face when the relative angular movement occurs.

2. A connector assembly as claimed in claim 1, characterised in that the element (33) is axially contained in a recess (18) in one of the basic parts (11).

3. A connector assembly as claimed in claim 1, characterised in that there are four first abutment faces (67, 67a, 68, 68a), two arranged on each of the two basic parts (11, 12), and that the element (33b) is rotatable about the common axis (13) in relation to both of the basic parts.

4. A connector assembly as claimed in claim 1, characterised in that the element (33a) provides alternative choices of the possible range of relative angular movement of the two basic parts of the assembly by arranging two pairs (36, 36a, 37, 37a) of second abutment faces on the disc on opposite sides of a diameter of the disc, the angular spacing between one such pair differing from the angular spacing of the other such pair, only one such pair being operative in the assembled connector according to the arrangement of the pair during assembly of the connector in relation to the first abutment faces.

5. A connector assembly as claimed in any of claims 1 to 4, characterised in that one of the basic parts (12) and the element (33) are releasably coupled for rotation about the common axis and are separable from each other and from the other basic part to enable substitution of the element to be made.

6. A connector assembly as claimed in any of claims 1 to 5, characterised by spring means (38) arranged to act between the element (33) and one of the basic parts (10) to urge one of the second abutment faces (36, 37) into engagement with one of the first abutment faces (31, 32).

7. A connector assembly as claimed in claim 6, characterised in that the spring means (38) is a coil spring surrounding the common axis (13) of the assembly.

**Revendications**

1. Dispositif d'assemblage destiné à être utilisé pour assembler un bras (3) d'essuie-glace et un balai (2) d'essuie-glace de façon à permettre un mouvement de pivotement du balai par rapport au bras autour d'un axe commun (13) qui, en service, est sensiblement perpendiculaire à la surface à essuyer, le dispositif comprenant deux pièces de base, à savoir une première pièce (11) conçue pour être fixée au bras (13) d'essuie-glace et une seconde pièce (12) conçue pour être fixée directement ou indirectement au balai (2) d'essuie-glace, les pièces étant-articulées entre elles de façon à pouvoir effectuer un mouvement angulaire relatif autour de l'axe commun (13) et des moyens de butée étant prévus pour limiter l'intervalle de ce mouvement angulaire relatif, le dispositif comprenant, en outre, un élément séparé (33) monté à rotation autour de l'axe commun par rapport à l'une des deux pièces de base, les moyens de butée comprenant deux premières faces de butée (31, 32) angulairement espacées portées par la partie du dispositif qui est constituée par les deux pièces de base, et les moyens de butée comprenant, en outre, deux secondes faces de butée (36, 37) angulairement espacées formées sur l'élément séparé, les secondes faces étant agencées de manière à coopérer avec les premières faces respectives afin de limiter l'intervalle de mouvement angulaire relatif des deux pièces de base autour de l'axe commun, caractérisé en ce que l'élément séparé est essentiellement un disque plat (33) disposé entre les deux pièces de base et ayant un trou central (34) par lequel passe l'axe commun, l'élément ayant des parties (33, 35) de rayons différents jointes par des faces radiales (36, 37) qui constituent les secondes faces de butée; et les premières faces de butée (31, 32) sont formées sur une partie (29) de l'une des deux pièces de base (11) qui s'étend sur une distance suffisante en direction de l'autre pièce de base (12) pour permettre à chaque première face de butée de venir en appui contre une seconde face de butée respective lorsque le mouvement angulaire relatif se produit.

2. Dispositif d'assemblage selon la revendication 1, caractérisé en ce que l'élément (33) est axialement contenu dans un évidement (18) formé dans l'une des pièces de base (11).

3. Dispositif d'assemblage selon la revendication 1, caractérisé en ce qu'il est prévu quatre premières faces de butée (67, 67a, 68, 68a), dont deux disposées sur chacune des pièces de base (11, 12) et en ce que l'élément (33b) peut tourner autour de l'axe commun (13) par rapport aux deux pièces de base.

4. Dispositif d'assemblage tel que revendiqué dans la revendication 1, caractérisé en ce que l'élément (33a) fournit des choix alternatifs d'intervalle possible de mouvement angulaire des deux pièces de base du dispositif en disposant deux paires (36, 36a, 37, 37a) de secondes faces de butée formées sur le disque sur les côtés opposés d'un diamètre du disque, l'espacement angulaire entre une première desdites paires étant différent de l'espacement angulaire de l'autre dite paire, une seule de ces paires étant opérante dans le dispositif d'assemblage assemblé selon la disposition de la paire pendant l'assemblage du dispositif d'assemblage par rapport aux premières faces de butée.

5. Dispositif d'assemblage selon l'une quelconque des revendications 1 à 4, caractérisé en ce que l'une des pièces de base (12) et l'élément (33) sont accouplés entre eux de manière séparable à rotation autour de l'axe commun, et sont séparables l'un de l'autre et de l'autre pièce de base pour permettre le remplacement de l'élément.

6. Dispositif d'assemblage selon l'une quelconque des revendications 1 à 5, caractérisé par des moyens élastiques (33) agencés de façon à agir entre l'élément (33) et l'une des pièces de base (10) pour repousser l'une des secondes faces de butée (36, 37) en appui contre l'une des premières faces de butée (31, 32).

7. Dispositif d'assemblage selon la revendication 6, caractérisé en ce que les moyens élastiques (38) sont constitués par un ressort hélicoïdal entourant l'axe commun (13) du dispositif.

## Patentansprüche

1. Vorrichtung zum gelenkigen Verbinden eines Scheibenwischerarmes (3) mit einem Wischerblatt (2), wobei das Wicherblatt relative zu dem Arm um eine gemeinsame Achse (13) drehbar ist, die mindestens annähernd senkrecht zu der zu bestreichenden Fläche verläuft, und die zwei Hauptteile umfasst, nämlich ein erstes Hauptteil (11), das mit dem Wischerarm (3) verbunden wird, und ein zweites Hauptteil (12), das direkt oder indirekt mit dem Wischerblatt (2) verbunden wird, wobei die beiden Hauptteile um eine gemeinsame Achse (13) relativ zueinander drehbar sind und Anschlagelemente zur Begrenzung der relativen Drehbewegung vorgesehen sind und die ferner ein Element (33) enthält, das um die gemeinsame Drehachse in Bezug auf den einen oder die beiden Hauptteile drehbar ist, wobei die Anschlagelemente zwei erste durch einen Winkel getrennte Anschlagflächen (31, 32) aufweisen und aus den beiden Hauptteilen bestehen und die Anschlagflächen ferner zwei durch einen Winkel getrennte Anschlagflächen (36, 37) auf dem Element (33) aufweisen, wobei die zweiten Flächen mit den entsprechenden ersten Flächen zusammenwirken, um das Ausmaß der relativen Winkelverdrehung der beiden Hauptteile um die gemeinsame Achse zu begrenzen, dadurch gekennzeichnet, daß das Element im wesentlichen von einer flachen Scheibe (33) gebildet wird, welche zwischen den beiden Hauptteilen liegt und eine Mittelöffnung (34) besitzt, durch welche die gemeinsame Achse (13) hindurchtritt, das Element ferner Teile (33, 35) von unterschiedlichem Durchmesser besitzt, welche durch radiale Anschlagflächen (36, 37) miteinander verbunden sind, welche die zweiten Anschlagflächen bilden und daß die ersten Anschlagflächen (31, 32) auf einem Teil (29) einer der beiden Teile (11) angeordnet sind, welcher einen genügenden Abstand gegenüber dem anderen Hauptteil (12) besitzt, damit jede erste Anschlagfläche die entsprechende zweite Anschlagfläche erfasst, wenn die relative Bewegung stattfindet.

2. Vorrichtung nach Anspruch 1, dadurch gekennzeichnet, daß das Element (33) axial in einer Ausnehmung (18) einer der Grundteile (11) enthalten ist.

3. Vorrichtung nach Anspruch 1, dadurch gekennzeichnet, daß vier erste Anschlagflächen (67, 67a, 68, 68a) angeordnet sind, von denen je zwei auf den beiden Hauptteilen (11, 12) angeordnet sind und daß das Element (33b) in Bezug auf die beiden Hauptteile um die gemeinsame Achse drehbar ist.

4. Vorrichtung nach Anspruch 1, dadurch gekennzeichnet, daß das Element (33a) unterschiedliche Auswahlen des möglichen Ausmaßes der relativen Winkelbewegung der beiden Hauptteile der Anordnung gestattet, und zwar durch Anordnung von zwei Paaren (36, 36a, 37, 37a) der zweiten Anschlagflächen auf der Scheibe der gegenüberliegenden Seiten eines Durchmessers der Scheibe, wobei der Winkelabstand zwischen einem derartigen Paar sich von dem Winkelabstand des anderen derartigen Paares unterscheidet und nur eines der Paare in der Verbindungsvorrichtung wirksam ist und zwar entsprechend der Anordnung des Paares während des Zusammenbaus der Vorrichtung in Bezug auf die ersten Anschlagflächen.

5. Vorrichtung nach Anspruch 1—4, dadurch gekennzeichnet, daß eines der Basis-Teile (12) und das Element (33) lösbar auf der gemeinsamen Drehachse angeordnet sind und daß sie voneinander sowie von dem anderen Hauptteil getrennt werden können, um eine Auswechslung des Elementes zu ermöglichen.

6. Vorrichtung nach Anspruch 1—5, dadurch gekennzeichnet, daß zwischen dem Element (33) und einem der Hauptteile (10) eine Feder (38) angeordnet ist, um eine der zweiten Anschlagflächen (36, 37) in Eingriff mit einer der ersten anschlagflächen (31, 32) zu drücken.

7. Vorrichtung nach Anspruch 6, dadurch gekennzeichnet, daß das Federglied (38) eine Schraubenfeder ist, welche die Achse (13) der Vorrichtung umgibt.

*Fig.1.*

*Fig.2.*

0038335

Fig.3.

Fig.4.

0038 335

Fig.5.

Fig.6.

Fig.7.

Fig.8.

Fig.9.